# EUROPEAN PATENT APPLICATION

(11) **EP 3 176 996 A1**
(43) Date of publication of application: **07.06.2017**
(21) Application number: 16757540.6
(22) Date of filing: 11.05.2016
(51) Int. Cl.: H04L 29/08, H04W 4/04

(54) **VEHICLE OPERATION CONTROL METHOD, RELATED EQUIPMENT AND SYSTEM**

(30) Priority: 19.10.2015 CN 201510679392
(71) Applicant: LE Holdings (Beijing) Co., Ltd., Beijing 100025 (CN); Leauto Intelligent Technology (BEIJING) Co. Ltd, Beijing 100025 (CN)
(72) Inventor: FENG, Binglin, Chaoyang District Beijing 100025 (CN)
(74) Representative: Botti, Mario
(86) International application number: PCT/CN2016/081727
(87) International publication number: WO 2017/067150

(57) **Abstract**

The present invention provides a vehicle operation control method, and related devices and system. The vehicle operation control method includes: receiving a first vehicle operation instruction sent by a user terminal over a cellular network, wherein the first vehicle operation instruction carries a vehicle identifier of an operated vehicle, and vehicle operation information; searching stored correspondence relationships between vehicle identifiers and satellite positioning terminal identifiers for a identifier of a satellite positioning terminal installed in the operated vehicle according to the vehicle identifier; and sending a second vehicle operation instruction to a satellite ground station, wherein the second vehicle operation instruction carries the found satellite positioning terminal identifier and the vehicle operation information, so that the satellite ground station sends the second vehicle operation instruction to the satellite positioning terminal corresponding to the satellite positioning terminal identifier through a positioning satellite in a short message, and the satellite positioning terminal further instructs a BCM in an ECU of the vehicle through an on-board controller installed in the operated vehicle to perform a corresponding vehicle operation according to the vehicle operation information.

## Description

This application claims the priority to Chinese Patent Application No. 201510679392.3, filed with the State Intellectual Property Office of People's Republic of China on October 19, 2015 and entitled "Vehicle operation control method, and related devices and system", the content of which is hereby incorporated by reference in its entirety.

### Field

The present invention relates to the field of the Internet of vehicles and particularly to a vehicle operation control method, and related device and system thereof.

### Background

At present a transceiver and other devices need to be installed in a vehicle so that the vehicle can be locked or unlock remotely, and a user sends a lock or unlock instruction to the transceiver installed in the vehicle through a remote controller, where the remote controller and the transceiver communicate with each other through short-distance communication technologies, e.g., Bluetooth technology, radio frequency identification technology, etc. The transceiver installed in the vehicle sends the received lock or unlock instruction to a Body Control Module (BCM) in an Electric Control Unit (ECU) of the vehicle over a bus upon reception of the lock or unlock instruction, so that the BCM is responsible for performing a corresponding lock or unlock operation.

In the existing lock or unlock solution, the remote controller of the vehicle has to communicate with the transceiver installed in the vehicle through short-distance communication technologies, so if the distance between them is larger than the longest supportable communication distance, then the transceiver may fail to receive the lock, unlock or another operation instruction sent by the remote controller, so that no lock or unlock operation can be performed. For example, if a user getting back home realizes that he or she forgets locking his or her car, then he or she has to go back around the place where the car is parked to lock the car through the remote controller.

In view of this, it is highly desirable in the prior art to address the technical problem of how to perform vehicle operations including locking or unlocking the vehicle over a long distance.

### Summary

The present invention provides a vehicle operation control method, and related devices and system so as to operate on a vehicle over a long distance.

An embodiment of the present invention provides a vehicle operation control method performed by a vehicle control server, the method including:
receiving a first vehicle operation instruction sent by a user terminal over a cellular network, wherein the first vehicle operation instruction carries a vehicle identifier of an operated vehicle, and vehicle operation information;
searching stored correspondence relationships between vehicle identifiers and satellite positioning terminal identifiers for a identifier of a satellite positioning terminal installed in the operated vehicle according to the vehicle identifier; and
sending a second vehicle operation instruction to a satellite ground station, wherein the second vehicle operation instruction carries the found satellite positioning terminal identifier and the vehicle operation information, so that the satellite ground station sends the second vehicle operation instruction to the satellite positioning terminal corresponding to the satellite positioning terminal identifier through a positioning satellite in a short message, and the satellite positioning terminal further instructs a BCM in an Electronic Control Unit (ECU) of the vehicle through an on-board controller installed in the operated vehicle to perform a corresponding vehicle operation according to the vehicle operation information.

An embodiment of the present invention provides a vehicle operation control method performed by a satellite ground station, the method including:
receiving, by a satellite ground station, a vehicle operation instruction sent by a vehicle control server, wherein the vehicle operation instruction carries a satellite positioning terminal identifier and vehicle operation information;
sending, by the satellite ground station, the vehicle operation instruction to a satellite positioning terminal corresponding to the satellite positioning terminal identifier through a positioning satellite in a short message, so that the satellite positioning terminal instructs a BCM in an Electronic Control Unit (ECU) of an operated vehicle through an on-board controller installed in the vehicle, to perform a corresponding vehicle operation according to the vehicle operation information.

An embodiment of the present invention provides a vehicle operation control method performed by a satellite positioning terminal, the method including:
receiving, by a satellite positioning terminal, a vehicle operation instruction sent by a satellite ground station through a positioning satellite in a short message, wherein the vehicle operation instruction carries vehicle operation information; and
forwarding the vehicle operation information to an on-board controller installed in an operated vehicle, so that the on-board controller instructs a BCM in an Electronic Control Unit (ECU) of the vehicle to perform a corresponding vehicle operation according to the vehicle operation information.

An embodiment of the present invention provides a vehicle control server including:
a receiving unit configured to receive a first vehicle operation instruction sent by a user terminal over a cellular network, wherein the first vehicle operation instruction carries a vehicle identifier of an operated vehicle, and vehicle operation information;
a searching unit configured to search stored correspondence relationships between vehicle identifiers and satellite positioning terminal identifiers for a identifier of a satellite positioning terminal installed in the operated vehicle according to the vehicle identifier; and
a sending unit configured to send a second vehicle operation instruction to a satellite ground station, wherein the second vehicle operation instruction carries the found satellite positioning terminal identifier and the vehicle operation information, so that the satellite ground station sends the second vehicle operation instruction to the satellite positioning terminal corresponding to the satellite positioning terminal identifier through a positioning satellite in a short message, and the satellite positioning terminal further instructs a BCM in an Electronic Control Unit (ECU) of the vehicle through an on-board controller installed in the operated vehicle to perform a corresponding vehicle operation according to the vehicle operation information.

An embodiment of the present invention provides a satellite ground station including:
a receiving unit configured to receive a vehicle operation instruction sent by a vehicle control server, wherein the vehicle operation instruction carries a satellite positioning terminal identifier and vehicle operation information;
a sending unit configured to send the vehicle operation instruction to a satellite positioning terminal corresponding to the satellite positioning terminal identifier through a positioning satellite in a short message, so that the satellite positioning terminal instructs a BCM in an Electronic Control Unit (ECU) of an operated vehicle through an on-board controller installed in the vehicle, to perform a corresponding vehicle operation according to the vehicle operation information.

An embodiment of the present invention provides a satellite positioning terminal including:
a receiving unit configured to receive a vehicle operation instruction sent by a satellite ground station through a positioning satellite in a short message, wherein the vehicle operation instruction carries vehicle operation information; and
a sending unit configured to forward the vehicle operation information to an on-board controller installed in an operated vehicle, so that the on-board controller instructs a BCM in an Electronic Control Unit (ECU) of the vehicle to perform a corresponding vehicle operation according to the vehicle operation information.

An embodiment of the present invention provides a vehicle operation control system including:
a user terminal configured to send a first vehicle operation instruction to a vehicle control server over a cellular network, wherein the first vehicle operation instruction carries a vehicle identifier of an operated vehicle, and vehicle operation information;
the vehicle control server configured to search stored correspondence relationships between vehicle identifiers and satellite positioning terminal identifiers for a identifier of a satellite positioning terminal installed in the operated vehicle according to the vehicle identifier; and to send a second vehicle operation instruction to a satellite ground station, wherein the second vehicle operation instruction carries the found satellite positioning terminal identifier and the vehicle operation information;
the satellite ground station configured to send the vehicle operation information to the satellite positioning terminal corresponding to the satellite positioning terminal identifier through a positioning satellite in a short message;
the satellite positioning terminal configured to forward the vehicle operation information to an on-board controller installed in the operated vehicle; and
the on-board controller configured to send the vehicle operation information to a BCM in an Electronic Control Unit (ECU) of the vehicle, so that the BCM performs a corresponding vehicle operation according to the vehicle operation information.

With the vehicle operation control system and methods, and related devices according to the embodiments of the present invention, when the vehicle operation instruction sent by the user terminal over the cellular network is received, the satellite positioning terminal installed in the operated vehicle is searched for according to the vehicle identifier carried therein, and the vehicle operation information is sent by the satellite ground station to the satellite positioning terminal installed in the operated vehicle through the positioning satellite in the short message, so that the satellite positioning terminal instructs the BCM in the ECU of the vehicle through the on-board controller to perform the corresponding vehicle operation. In the process above, since the user terminal sends the vehicle operation instruction to the satellite positioning terminal installed in the operated vehicle in the short message through the satellite ground station from the network side over the cellular network, there will be an unlimited communication distance over the cellular network and in satellite communication, thus operating on the vehicle over a long distance.

### Brief Description of the Drawings

In order to describe more clearly the technical solutions according to the embodiments of the present invention or in the prior art, the drawings to which reference is made in the description of the embodiments or the prior art will be described below briefly, and evidently the drawings described below are merely illustrative of some of the embodiments of the present invention, and those ordinarily skilled in the art can further derive other drawings from these drawings without any inventive effort. In the drawings:
Fig.1 illustrates a schematic structural diagram of a vehicle operation control system according to an embodiment of the present invention;
Fig.2 illustrates a flow chart of a vehicle operation control method performed by a vehicle control server according to an embodiment of the present invention;
Fig.3 illustrates a schematic flow chart in which a user controls a vehicle operation through a user terminal according to an embodiment of the present invention;
Fig.4 illustrates a schematic structural diagram of a vehicle operation control device embodied as a satellite ground station according to an embodiment of the present invention;
Fig.5 illustrates a schematic structural diagram of a vehicle operation control device embodied as a satellite positioning terminal according to an embodiment of the present invention;
Fig.6 illustrates a schematic diagram of a vehicle control server according to an embodiment of the present invention;
Fig.7 illustrates a schematic diagram of a satellite ground station according to an embodiment of the present invention; and
Fig.8 illustrates a schematic diagram of a satellite positioning terminal according to an embodiment of the present invention.

### Detailed Description of the Embodiments

In order to make the objects, technical solutions, and advantages of the present invention more apparent, the technical solutions according to the embodiments of the present invention will be described below clearly and fully with reference to the drawings in the embodiments of the present invention, and apparently the embodiments described below are only a part but not all of the embodiments of the present invention. All the other embodiments which can occur to those ordinarily skilled in the art based upon the embodiments here in the present invention without any inventive effort shall fall into the clamed scope of the present invention.

A satellite positioning system according to an embodiment of the present invention can include but will not be limited to a Beidou satellite navigation system, or any satellite positioning system in which communication can be conducted using a short message. For the sake of a convenient description, the embodiment of the present invention will be described taking the Beidou satellite navigation system as an example, but a vehicle operation can be performed in another vehicle positioning system under the same principle as that under which a vehicle operation is performed in the Beidou satellite navigation system, so reference can be made for an implementation of a vehicle operation in the Beidou satellite navigation system for a particular implementation thereof, where if the satellite positioning system is the Beidou satellite navigation system, then the satellite positioning terminal is a Beidou user terminal, the satellite ground station is a Beidou ground station, and the positioning satellite is a Beidou satellite.

The Beidou satellite navigation system is a regional navigation positioning system established by P. R. China. The system is consisted of three Beidou positioning satellites BD-1 (including two operating satellites, and one spare satellite), a Beidou ground station, and a Beidou user terminal. The Beidou system can provide the following three functions: (1) rapid positioning to provide the user in a service area with an all-weather, high-precision, and rapid and real-time positioning service with the positioning precision of 20 to 100 meters; (2) short-message communication, where the user terminal of the Beidou system has the capability of bidirectional message communication so that the user can transmit short-message information of 40 to 60 Chinese characters at a time; and (3) precise timing, where the Beidou system is capable of precise timing to provide the user with temporal synchronization precision of 20 ns to 100 ns, where short-message communication is such a unique function of the Beidou satellite navigation system that the Beidou user terminal, the Beidou satellite, and the Beidou ground service station can transmit information directly from and to each other through satellite signals without any reliance upon a communication network.

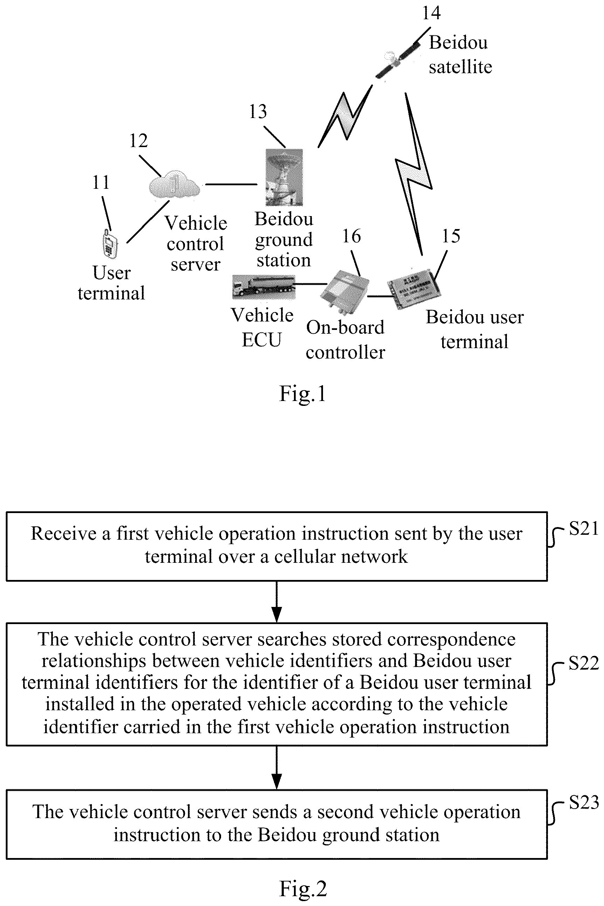

With the function of Beidou short-message communication function, an embodiment of the present invention provides a vehicle operation control method based on Beidou short-message communication according to an embodiment of the present invention. As illustrated in Fig.1, there is illustrated a schematic structural diagram of a vehicle operation control system according to an embodiment of the present invention, which includes a user terminal 11 in which a vehicle operation control application is installed, a vehicle control server 12, a Beidou ground station 13, a Beidou satellite 14, a Beidou user terminal 15, and an on-board controller 16 installed in a vehicle, where the on-board controller 16 can include but will not be limited to an on-board Microsoft system (T-box) or a front vehicle machine, an On-Board Diagnostic (OBD) system or a rear vehicle machine, and even a private Wireless Access in a Vehicular Environment Telematics Box (WAVE Box). The Beidou user terminal 15 sends a vehicle operation instruction to a BCM in an ECU of the vehicle through the on-board controller 16.

Particularly the user terminal 11 can communicate with the vehicle control server 12 over a cellular network, e.g., a 3G/4G network, etc.; the vehicle control server 12 can communicate with the Beidou ground station 13 over a private network in compliance with a communication protocol which can be the Transmission Control Protocol/Internet Protocol (TCP/IP); the Beidou ground station 13 can communicate with the Beidou satellite 14, and the Beidou satellite 14 can communicate with the Beidou user terminal 15, in a Beidou short message; the Beidou user terminal 15 can communicate with the on-board controller 16 over a private network, e.g., the Internet of vehicles, in compliance with a communication protocol which can also be the TCP/IP; and the on-board controller 16 can send the received vehicle operation instruction to the BCM in the ECU of the vehicle over a bus, so that the BCM in the ECU of the vehicle is responsible for performing a corresponding vehicle operation. The bus as referred to here can include but will not be limited to a Controller Area Network (CAN) bus, a Serial Peripheral Interface (SPI) bus, a customized bus, a Universal Asynchronous Receiver Transmitter (UART) bus, a Local Interconnect Network (LIN) bus, an vehicular Ethernet, etc.

In the application scenario above, the principle of a vehicle operation control method according to an embodiment of the present invention is as follows: a user going to perform a vehicle operation sends a vehicle operation instruction to the vehicle control server 12 through the vehicle operation control application installed in the user terminal 11 over a cellular network, where the vehicle operation instruction can include but will not be limited to a lock or unlock instruction, the vehicle control server 12 sends the received vehicle operation instruction to the Beidou ground station 13 over a private network, the Beidou ground station 13 sends the received vehicle operation instruction to the Beidou satellite 14 in a Beidou short message, the Beidou Satellite 14 sends the received vehicle operation instruction to the Beidou user terminal 15 installed in the vehicle in a Beidou short message, the Beidou user terminal 15 forwards the received vehicle operation instruction to the on-board controller 16 installed in the vehicle, and the on-board controller 16 issues the received vehicle operation instruction to the BCM in the ECU of the vehicle over a bus, so that the BCM in the ECU of the vehicle performs the corresponding operation in response to the received vehicle operation instruction.

A particular implementation of the present invention will be described below in connection with a particular embodiment thereof.

In a particular implementation, the user is registered with the vehicle control server to obtain a user identifier, which can be a username, a handset number of the user, etc., although the embodiment of the present invention will not be limited thereto as long as the user can be uniquely identified.

The successfully registered user can bind his or her registered user identifier with the vehicle identifier of his or her vehicle, and the identifier of the Beidou user terminal installed in the vehicle to create a correspondence relationship between the user identifier, the vehicle identifier, and the Beidou user terminal identifier. In a particular implementation, the user can bind at least one vehicle identifier and Beidou user terminal identifier, for example, a service user, e.g., a vehicle lease service enterprise, etc., can bind a plurality of vehicle identifiers and the identifiers of Beidou user terminals installed in respective vehicles, where the vehicle identifiers can be license plate numbers, vehicle engine numbers, etc., although the embodiment of the present invention will not be limited thereto.

It shall be noted that there may be a one-to-one correspondence relationship or a one-to-multiple correspondence relationship between the user identifier and the vehicle identifier(s) or the Beidou user terminal identifier(s), that is, one user identifier can correspond to multiple vehicle identifiers or Beidou user terminal identifiers, and there may be a one-to-one correspondence relationship between the vehicle identifier and the Beidou user terminal identifier, that is, one vehicle identifier can only correspond to one Beidou user terminal identifier.

Optionally the vehicle control server can create the correspondence relationship between the user identifier and the vehicle identifier in the following operations:
In the first operation, a binding request sent by the user terminal is received, where the binding request carries the user identifier, the at least one vehicle identifier, and the identifier of the Beidou user terminal installed in the vehicle corresponding to each vehicle identifier, to be bound.

In a particular implementation, the user who needs to bind the user identifier with the vehicle identifier and the Beidou user terminal identifier can send the binding request to the vehicle control server through the user terminal by carrying the user identifier, the vehicle identifier, and the Beidou user terminal identifier, to be bound, in the binding request. If the user needs to bind multiple vehicle identifiers and Beidou user terminal identifiers, then the user can carry the multiple vehicle identifiers and Beidou user terminal identifiers together in one binding request or can carry only one of the vehicle identifiers at a time and bind the user identifier with the multiple vehicle identifiers and the multiple Beidou user terminal identifiers by sending a plurality of binding requests to the vehicle control server, although the embodiment of the present invention will not be limited thereto.

It shall be noted that if the user carries multiple vehicle identifiers and Beidou user terminal identifiers in one binding request, then correspondence relationships between the vehicle identifiers and the Beidou user terminal identifiers need to be further indicated.

In the second operation, the vehicle control server creates the correspondence relationships between the received user identifier, and respective vehicle identifiers and their corresponding Beidou user terminal identifiers respectively.

The vehicle control server creates and stores locally the correspondence relationships between the user identifier, and the vehicle identifiers and their corresponding Beidou user terminal identifiers upon reception of the binding request. As depicted in Table 1, there is depicted a possible table structure of the correspondence relationships between the user identifiers, and the vehicle identifiers and their corresponding Beidou user terminal identifiers, which is stored by the vehicle control server:

**Table 1**

| User identifier | Vehicle identifier | Beidou user terminal identifier |
|---|---|---|
| U-ID1 | V-ID1 | E-ID1 |
| U-ID2 | V-ID21 | E-ID21 |
| | V-ID22 | E-ID22 |
| | V-ID23 | E-ID23 |
| | V-ID24 | E-ID24 |
| | ...... | ...... |
| ...... | ...... | ...... |
| U-IDn | V-IDn | E-IDn |

A vehicle operation method according to an embodiment of the present invention will be introduced below with reference to the schematic diagram of the vehicle operation control system illustrated in Fig.1 together with the analysis above.

As illustrated in Fig.2, there is illustrated a flow chart of an embodiment of a vehicle operation method, which can include the following operations:
S21. A first vehicle operation instruction sent by the user terminal over a cellular network is received.
   In a particular implementation, if a user needs to perform a lock, unlock or another operation on a vehicle, then he or she can send the first vehicle operation instruction to a vehicle control server over the cellular network using his or her user terminal by carrying the vehicle identifier of the operated vehicle and vehicle operation information in the sent first vehicle operation instruction. For example, the first vehicle operation instruction can carry a license plate number or an engine number of the operated vehicle, and the vehicle operation information, e.g., "Lock", "Unlock" or other operation information.
S22. The vehicle control server searches stored correspondence relationships between vehicle identifiers and Beidou user terminal identifiers for the identifier of a Beidou user terminal installed in the operated vehicle according to the vehicle identifier carried in the first vehicle operation instruction.
   The vehicle control server searches Table 1 for the Beidou user terminal identifier corresponding to the vehicle identifier carried in the first vehicle operation instruction sent by the user terminal according to the vehicle identifier upon reception of the first vehicle operation instruction.
S23. The vehicle control server sends a second vehicle operation instruction to the Beidou ground station.

Particularly the vehicle control server sends the second vehicle operation instruction to the Beidou ground station through a private network between the vehicle control server and the Beidou ground station by carrying the Beidou user terminal identifier found in the operation S22 and the vehicle operation information, in the sent second vehicle operation instruction.

The Beidou ground station parses the received second vehicle operation instruction for the Beidou user terminal identifier and the vehicle operation information, and sends the vehicle operation information to the Beidou user terminal corresponding to the Beidou user terminal identifier through the Beidou satellite in a short message, where the Beidou ground station can send the vehicle operation information in the short message in the form of a plain text or in the form of a cipher text, in the latter of which the vehicle operation information is encrypted and then sent in the short message. The Beidou user terminal sends the vehicle operation information to the on-board controller over a private network between the Beidou user terminal and the on-board controller upon reception of the vehicle operation information, and the on-board controller sends the vehicle operation information to a Body Control Module (BCM) in the ECU of the vehicle over a bus, so that the BCM performs a corresponding operation. By way of an example in which the vehicle operation information is "Lock", the BCM locks the engine and the door in response to the received second vehicle operation information.

In the vehicle operation method above, the vehicle control server sends the vehicle operation instruction to the operated vehicle in the Beidou short message, and since a satellite signal is relatively stable, the vehicle operation instruction can be transmitted in the Beidou short message more stable than another network signal, e.g., a cellular network signal, and since there is a limited signal coverage area of the cellular network signal, etc., if the vehicle is parked at a site where there is a poor cellular network signal, then the vehicle cannot be operated on remotely, so that the remote operation on the vehicle will not work. Since the satellite signal is far stronger than the cellular network signal, the vehicle operation instruction can be transmitted in the Beidou short message to thereby improve the success ratio of transmitting the vehicle operation instruction and the performance of the remote operation on the vehicle. Moreover if the vehicle is operated on remotely over the cellular network, then a cellular network terminal should be installed in the vehicle, and corresponding traffic over the cellular network will be incurred, thus increasing the cost of the remote operation on the vehicle and degrading the experience of the user; and the vehicle can be operated on remotely in the Beidou short message simply by installing the Beidou user terminal in the vehicle, thus lowering the cost of the remote operation on the vehicle and improving the experience of the user.

In a particular implementation, there may be also the following application scenario: the user A sends a vehicle operation instruction to the vehicle control server, but may carry the vehicle identifier of the user B in the vehicle operation instruction due to an operation error or another reason, thus resulting in an improper operation.

Thus in order to enhance the security of vehicle operation control, the user identifier can be further carried in the first vehicle operation instruction in an embodiment of the present invention. The vehicle control server determines whether the user identifier corresponding to the vehicle identifier carried in the first vehicle operation instruction is the same as the user identifier carried in the first vehicle operation instruction, according to its stored correspondence relationships between user identifiers, and vehicle identifiers and Beidou user terminal identifiers, and according to the user identifier, and the vehicle identifier and its corresponding Beidou user terminal identifier, carried in the first vehicle operation instruction before the operation S22 is performed, and if they are the same, then the vehicle control server proceeds to the operation S22; otherwise, the vehicle control server intercepts the first vehicle operation instruction, and returns an alert message of an operation failure to the user terminal.

In order to better understand the embodiment of the present invention, a particular implementation of the embodiment of the present invention will be described below by way of an example of a flow in which a user controls a vehicle operation through a user terminal.

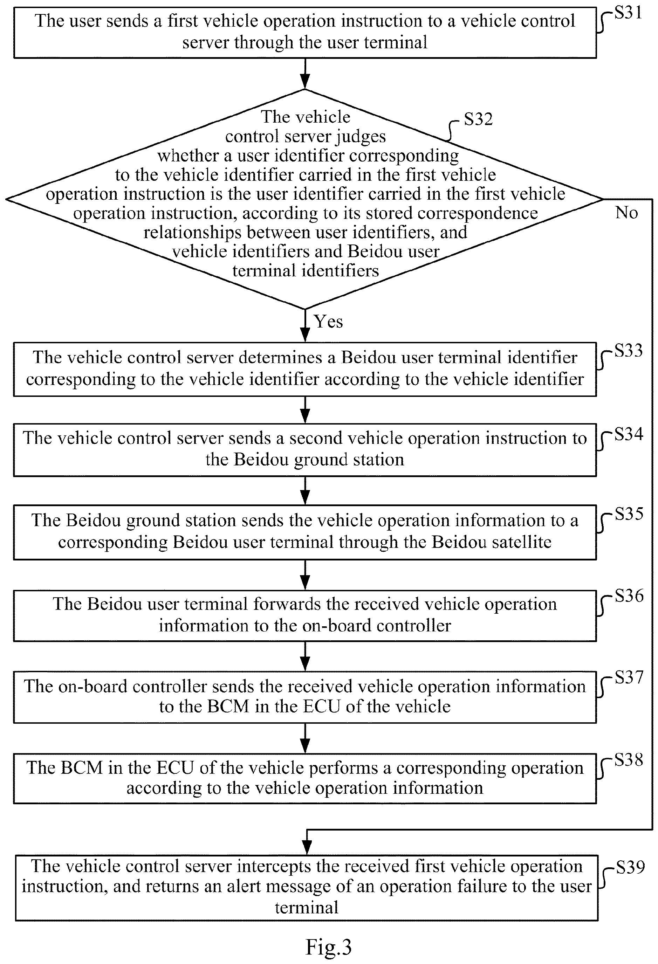

As illustrated in Fig.3, there is illustrated a flow chart in which a user controls a vehicle operation through a user terminal, which can include the following operations:
S31. The user sends a first vehicle operation instruction to a vehicle control server through the user terminal.
   Particularly the sent first vehicle operation instruction carries the vehicle identifier of an operated vehicle, the user identifier of the user, and vehicle operation information.
   It shall be appreciated that if the user needs to perform the same operation on multiple vehicles, then the first vehicle operation instruction can carry the vehicle identifiers of the multiple operated vehicles together.
S32. The vehicle control server judges whether a user identifier corresponding to the vehicle identifier carried in the first vehicle operation instruction is the user identifier carried in the first vehicle operation instruction, according to its stored correspondence relationships between user identifiers, and vehicle identifiers and Beidou user terminal identifiers, and if so, then the vehicle control server proceeds to the operation S33; otherwise, the vehicle control server proceeds to the operation S39.
S33. The vehicle control server determines a Beidou user terminal identifier corresponding to the vehicle identifier according to the vehicle identifier.
   Particularly vehicle control server searches the stored correspondence relationships between user identifiers, and vehicle identifiers and Beidou user terminal identifiers for the Beidou user terminal identifier corresponding to the vehicle identifier carried in the first vehicle operation instruction.
S34. The vehicle control server sends a second vehicle operation instruction to the Beidou ground station.
   Particularly the second vehicle operation instruction carries the Beidou user terminal identifier determined in the operation S33 and the vehicle operation information.
S35. The Beidou ground station sends the vehicle operation information to a corresponding Beidou user terminal through the Beidou satellite.
   Particularly the Beidou ground station sends the vehicle operation information to the Beidou user terminal corresponding to the found Beidou user terminal identifier through the Beidou satellite in a short message, where the vehicle operation information can be sent in the form of a plain text or can be encrypted and then sent, although the embodiment of the present invention will not be limited thereto.
S36. The Beidou user terminal forwards the received vehicle operation information to the on-board controller.
   Particularly upon reception of the vehicle operation information sent by the Beidou ground station through the Beidou satellite in the short message, the Beidou user terminal sends the vehicle operation information to the on-board controller over the Internet of vehicles between the Beidou user terminal and the on-board controller.
S37. The on-board controller sends the received vehicle operation information to the BCM in the ECU of the vehicle.
S38. The BCM performs a corresponding operation according to the vehicle operation information.
S39. The vehicle control server intercepts the received first vehicle operation instruction, and returns an alert message of an operation failure to the user terminal.

In the vehicle operation control method according to the embodiment of the present invention, the user terminal sends the vehicle operation instruction to the vehicle control server over the cellular network, the vehicle control server searches for the corresponding Beidou user terminal identifier according to the vehicle identifier carried in the vehicle operation instruction, and then sends the Beidou user terminal identifier to the Beidou ground station over the private network between the vehicle control server and the Beidou ground station, the Beidou ground station sends the vehicle operation instruction to the Beidou user terminal installed in the operated vehicle through the Beidou satellite in the short message, the Beidou user terminal sends the vehicle operation instruction to the on-board controller over the private network between the Beidou user terminal and the on-board controller, and the on-board controller instructs the BCM in the ECU of the vehicle to perform the corresponding operation, over the bus. Moreover since satellite communication is more stable and secure than another communication network signal, this can also improve the security and stability of the vehicle operation control method according to the embodiment of the present invention.

Based upon the same idea of the present invention, embodiments of the present invention further provide vehicle operation control methods performed by a satellite ground station and a satellite positioning terminal respectively, and related devices thereof, and since the devices and system above address the problem under a similar principle to the vehicle operation control method performed by a vehicle control server, reference can be made to the implementation of the method above for implementations of these methods, devices and system, although a repeated description thereof will be omitted here.

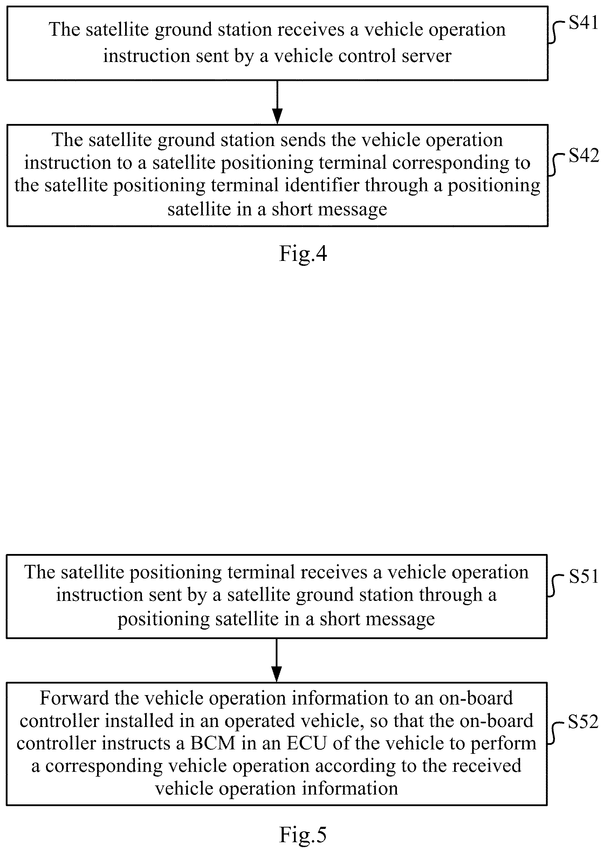

As illustrated in Fig.4, there is illustrated a flow chart of a vehicle operation control performed by a satellite ground station according to an embodiment of the present invention, which can include the following operations:
S41. The satellite ground station receives a vehicle operation instruction sent by a vehicle control server.
   Particularly the vehicle operation instruction carries a satellite positioning terminal identifier and vehicle operation information.
S42. The satellite ground station sends the vehicle operation instruction to a satellite positioning terminal corresponding to the satellite positioning terminal identifier through a positioning satellite in a short message.
   In a particular implementation, the satellite positioning terminal can instruct a BCM in an ECU of an operated vehicle through an on-board controller installed in the vehicle, to perform a corresponding vehicle operation according to the vehicle operation information.
   As illustrated in Fig.5, there is illustrated a flow chart of a vehicle operation control method performed by a satellite positioning terminal according to an embodiment of the present invention, which can include the following operations:
S51. The satellite positioning terminal receives a vehicle operation instruction sent by a satellite ground station through a positioning satellite in a short message.
   Particularly the vehicle operation instruction carries vehicle operation information.
S52. The vehicle operation information is forwarded to an on-board controller installed in an operated vehicle, so that the on-board controller instructs a BCM in an ECU of the vehicle to perform a corresponding vehicle operation according to the received vehicle operation information.

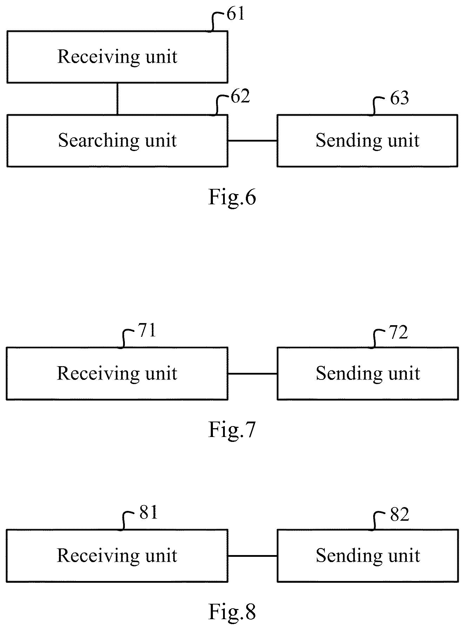

As illustrated in Fig.6, there is a schematic diagram of a vehicle control server according to an embodiment of the present invention, which can include:

A receiving unit 61 is configured to receive a first vehicle operation instruction sent by a user terminal over a cellular network, where the first vehicle operation instruction carries a vehicle identifier of an operated vehicle, and vehicle operation information;

A searching unit 62 is configured to search stored correspondence relationships between vehicle identifiers and satellite positioning terminal identifiers for a identifier of a satellite positioning terminal installed in the operated vehicle according to the vehicle identifier; and

A sending unit 63 is configured to send a second vehicle operation instruction to a satellite ground station, where the second vehicle operation instruction carries the found satellite positioning terminal identifier and the vehicle operation information, so that the satellite ground station sends the second vehicle operation instruction to the satellite positioning terminal corresponding to the satellite positioning terminal identifier through a positioning satellite in a short message, and the satellite positioning terminal further instructs a BCM in an Electronic Control Unit (ECU) of the vehicle through an on-board controller installed in the operated vehicle to perform a corresponding vehicle operation according to the vehicle operation information.

Particularly the first vehicle operation instruction further carries a user identifier; and

The vehicle control server further includes:
A determining unit is configured to determine that a user identifier corresponding to the vehicle identifier is the same as the user identifier carried in the first vehicle operation instruction, according to stored correspondence relationships between user identifiers, vehicle identifiers, and Beidou user terminal identifiers before the searching unit 62 searches the stored correspondence relationships between vehicle identifiers and satellite positioning terminal identifiers for the identifier of the satellite positioning terminal installed in the operated vehicle.

In a particular implementation, the vehicle control server can further include a correspondence relationship creating unit, where:
The receiving unit is configured to receive a binding request sent by the user terminal, where the binding request carries a user identifier, at least one vehicle identifier, and satellite positioning terminal identifiers of satellite positioning terminals installed in vehicles corresponding to the vehicle identifiers; and
The correspondence relationship creating unit is configured to create correspondence relationships between the user identifier, and the respective vehicle identifiers and their corresponding satellite positioning terminal identifiers respectively.

For the sake of a convenient description, the respective components above have been functionally described respectively as the respective modules (or units). Of course, in an implementation of the present invention, the functions of the respective modules (or units) can be performed in the same one or more pieces of software or hardware. In a particular implementation, the vehicle control server can be arranged in a server.

As illustrated in Fig.7, there is a schematic diagram of a satellite ground station according to an embodiment of the present invention, which can include:
A receiving unit 71 is configured to receive a vehicle operation instruction sent by a vehicle control server, where the vehicle operation instruction carries a satellite positioning terminal identifier and vehicle operation information; and
A sending unit 72 is configured to send the vehicle operation instruction to a satellite positioning terminal corresponding to the satellite positioning terminal identifier through a positioning satellite in a short message, so that the satellite positioning terminal instructs a BCM in an Electronic Control Unit (ECU) of an operated vehicle through an on-board controller installed in the vehicle, to perform a corresponding vehicle operation according to the vehicle operation information.

As illustrated in Fig.8, there is illustrated a schematic diagram of a satellite positioning terminal according to an embodiment of the present invention, which includes:
A receiving unit 81 is configured to receive a vehicle operation instruction sent by a satellite ground station through a positioning satellite in a short message, where the vehicle operation instruction carries vehicle operation information; and
A sending unit 82 is configured to forward the vehicle operation information to an on-board controller installed in an operated vehicle, so that the on-board controller instructs a BCM in an ECU of the vehicle to perform a corresponding vehicle operation according to the vehicle operation information.

The embodiments of the devices described above are merely exemplary, where the units described as separate components may or may not be physically separate, and the components illustrated as elements may or may not be physical units, that is, they can be collocated or can be distributed onto a number of network elements. Apart or all of the modules can be selected as needed in reality for the purpose of the solution according to the embodiments of the present invention. This can be understood and practiced by those ordinarily skilled in the art without any inventive effort.

Those skilled in the art can clearly appreciate from the foregoing description of the embodiments that the embodiments of the present invention can be implemented in hardware or in software plus a necessary general hardware platform. Based upon such understanding, the technical solutions above essentially or their parts contributing to the prior art can be embodied in the form of a computer software product which can be stored in a computer readable storage medium, e.g., an ROM/RAM, a magnetic disk, an optical disk, etc., and which includes several instructions to cause a computer device (e.g., a personal computer, a server, a network device, etc.) to perform the method according to the respective embodiments of the present invention.

Lastly it shall be noted that the embodiments above are merely intended to illustrate but not to limit the technical solution of the present invention; and although the present invention has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the spirit and scope of the present invention as claimed.

## Claims

1. A vehicle operation control method, comprising:
receiving a first vehicle operation instruction sent by a user terminal over a cellular network, wherein the first vehicle operation instruction carries a vehicle identifier of an operated vehicle, and vehicle operation information;
searching stored correspondence relationships between vehicle identifiers and satellite positioning terminal identifiers for a identifier of a satellite positioning terminal installed in the operated vehicle according to the vehicle identifier; and
sending a second vehicle operation instruction to a satellite ground station, wherein the second vehicle operation instruction carries the found satellite positioning terminal identifier and the vehicle operation information, so that the satellite ground station sends the second vehicle operation instruction to the satellite positioning terminal corresponding to the satellite positioning terminal identifier through a positioning satellite in a short message, and the satellite positioning terminal further instructs a Body Control Module (BCM) in an Electronic Control Unit (ECU) of the vehicle through an on-board controller installed in the operated vehicle to perform a corresponding vehicle operation according to the vehicle operation information.

2. The method according to claim 1, wherein the first vehicle operation instruction further carries a user identifier; and
the method further comprises:
determining that a user identifier corresponding to the vehicle identifier is the same as the user identifier carried in the first vehicle operation instruction, according to stored correspondence relationships between user identifiers, vehicle identifiers, and satellite positioning terminal identifiers before the stored correspondence relationships between vehicle identifiers and satellite positioning terminal identifiers are searched for the identifier of the satellite positioning terminal installed in the operated vehicle.

3. The method according to claim 2, wherein creating the correspondence relationships between user identifiers, vehicle identifiers, and satellite positioning terminal identifiers comprises:
receiving a binding request sent by the user terminal, wherein the binding request carries a user identifier, at least one vehicle identifier, and satellite positioning terminal identifiers of satellite positioning terminals installed in vehicles corresponding to the vehicle identifiers; and
creating correspondence relationships between the user identifier, and the respective vehicle identifiers and their corresponding satellite positioning terminal identifiers respectively.

4. A vehicle operation control method, comprising:
receiving, by a satellite ground station, a vehicle operation instruction sent by a vehicle control server, wherein the vehicle operation instruction carries a satellite positioning terminal identifier and vehicle operation information;
sending, by the satellite ground station, the vehicle operation instruction to a satellite positioning terminal corresponding to the satellite positioning terminal identifier through a positioning satellite in a short message, so that the satellite positioning terminal instructs a Body Control Module (BCM) in an Electronic Control Unit (ECU) of an operated vehicle through an on-board controller installed in the vehicle, to perform a corresponding vehicle operation according to the vehicle operation information.

5. The method according to claim 4, wherein the satellite ground station sends the short message in the form of a cipher text.

6. A vehicle operation control method, comprising:
receiving, by a satellite positioning terminal, a vehicle operation instruction sent by a satellite ground station through a positioning satellite in a short message, wherein the vehicle operation instruction carries vehicle operation information; and
forwarding the vehicle operation information to an on-board controller installed in an operated vehicle, so that the on-board controller instructs a Body Control Module (BCM) in an Electronic Control Unit (ECU) of the vehicle to perform a corresponding vehicle operation according to the vehicle operation information.

7. The method according to claim 6, wherein the short message is sent by the satellite ground station in the form of a cipher text.

8. A vehicle control server, comprising:
a receiving unit configured to receive a first vehicle operation instruction sent by a user terminal over a cellular network, wherein the first vehicle operation instruction carries a vehicle identifier of an operated vehicle, and vehicle operation information;
a searching unit configured to search stored correspondence relationships between vehicle identifiers and satellite positioning terminal identifiers for a identifier of a satellite positioning terminal installed in the operated vehicle according to the vehicle identifier; and
a sending unit configured to send a second vehicle operation instruction to a satellite ground station, wherein the second vehicle operation instruction carries the found satellite positioning terminal identifier and the vehicle operation information, so that the satellite ground station sends the second vehicle operation instruction to the satellite positioning terminal corresponding to the satellite positioning terminal identifier through a positioning satellite in a short message, and the satellite positioning terminal further instructs a Body Control Module (BCM) in an Electronic Control Unit (ECU) of the vehicle through an on-board controller installed in the operated vehicle to perform a corresponding vehicle operation according to the vehicle operation information.

9. The vehicle control server according to claim 8, wherein the first vehicle operation instruction further carries a user identifier; and
the vehicle control server further comprises:
a determining unit configured to determine that a user identifier corresponding to the vehicle identifier is the same as the user identifier carried in the first vehicle operation instruction, according to stored correspondence relationships between user identifiers, vehicle identifiers, and satellite positioning terminal identifiers before the stored correspondence relationships between vehicle identifiers and satellite positioning terminal identifiers are searched for the identifier of the satellite positioning terminal installed in the operated vehicle.

10. The vehicle control server according to claim 9, wherein the vehicle control server further comprises a correspondence relationship creating unit, wherein:
the receiving unit is configured to receive a binding request sent by the user terminal, wherein the binding request carries a user identifier, at least one vehicle identifier, and satellite positioning terminal identifiers of satellite positioning terminals installed in vehicles corresponding to the vehicle identifiers; and
the correspondence relationship creating unit is configured to create correspondence relationships between the user identifier, and the respective vehicle identifiers and their corresponding satellite positioning terminal identifiers respectively.

11. A satellite ground station, comprising:
a receiving unit configured to receive a vehicle operation instruction sent by a vehicle control server, wherein the vehicle operation instruction carries a satellite positioning terminal identifier and vehicle operation information;
a sending unit configured to send the vehicle operation instruction to a satellite positioning terminal corresponding to the satellite positioning terminal identifier through a positioning satellite in a short message, so that the satellite positioning terminal instructs a Body Control Module (BCM) in an Electronic Control Unit (ECU) of an operated vehicle through an on-board controller installed in the vehicle, to perform a corresponding vehicle operation according to the vehicle operation information.

12. A satellite positioning terminal, comprising:
a receiving unit configured to receive a vehicle operation instruction sent by a satellite ground station through a positioning satellite in a short message, wherein the vehicle operation instruction carries vehicle operation information; and
a sending unit configured to forward the vehicle operation information to an on-board controller installed in an operated vehicle, so that the on-board controller instructs a Body Control Module (BCM) in an Electronic Control Unit (ECU) of the vehicle to perform a corresponding vehicle operation according to the vehicle operation information.

13. A vehicle operation control system, comprising:
a user terminal configured to send a first vehicle operation instruction to a vehicle control server over a cellular network, wherein the first vehicle operation instruction carries a vehicle identifier of an operated vehicle, and vehicle operation information;
the vehicle control server configured to search stored correspondence relationships between vehicle identifiers and satellite positioning terminal identifiers for a identifier of a satellite positioning terminal installed in the operated vehicle according to the vehicle identifier; and to send a second vehicle operation instruction to a satellite ground station, wherein the second vehicle operation instruction carries the found satellite positioning terminal identifier and the vehicle operation information;
the satellite ground station configured to send the vehicle operation information to the satellite positioning terminal corresponding to the satellite positioning terminal identifier through a positioning satellite in a short message;
the satellite positioning terminal configured to forward the vehicle operation information to an on-board controller installed in the operated vehicle; and
the on-board controller configured to send the vehicle operation information to a Body Control Module (BCM) in an Electronic Control Unit (ECU) of the vehicle, so that the BCM in the ECU performs a corresponding vehicle operation according to the vehicle operation information.
